# EUROPEAN PATENT SPECIFICATION

(11) **EP 2 940 479 B1**
(45) Date of publication and mention of the grant of the patent: **03.10.2018**
(21) Application number: 13870074.5
(22) Date of filing: 25.12.2013
(51) Int. Cl.: G01P 3/489, G01P 13/04, G01D 5/244

(54) **VELOCITY MEASUREMENT DEVICE AND VELOCITY MEASUREMENT METHOD**
GESCHWINDIGKEITSMESSVORRICHTUNG UND GESCHWINDIGKEITSMESSVERFAHREN
DISPOSITIF DE MESURE DE VITESSE ET PROCÉDÉ DE MESURE DE VITESSE

(30) Priority: 26.12.2012 JP 2012283278
(43) Date of publication of application: 04.11.2015
(73) Proprietor: Schaft Inc., Tokyo 135-0064 (JP)
(72) Inventor: URATA, Jyunichi, Tokyo 153-0064 (JP); INABA, Masayuki, Kamagaya-shi, Chiba 273-0105 (JP)
(74) Representative: Anderson, Oliver Ben
(86) International application number: PCT/JP2013/084579
(87) International publication number: WO 2014/106937

(56) References cited:
- JP-A- H08 201 111
- JP-A- S58 113 766
- JP-A- 2002 062 163
- US-A- 5 500 585
- US-A1- 2006 082 460
- US-A1- 2009 251 129

## Description

### Technical field

The present invention relates generally to measuring a velocity, and more particularly to measuring a velocity based on an output from an encoder.

### Background of the Invention

For measuring a revolving speed of a spinning body such as a revolving shaft, using an encoder such as a rotary encoder that outputs a signal synchronized with the revolution of the body is well-known. For measuring a moving velocity of a linearly moving body, using a linear encoder that outputs a signal synchronized with the movement of the body is well-known.

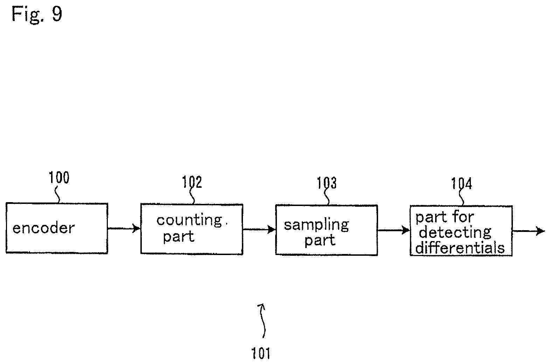

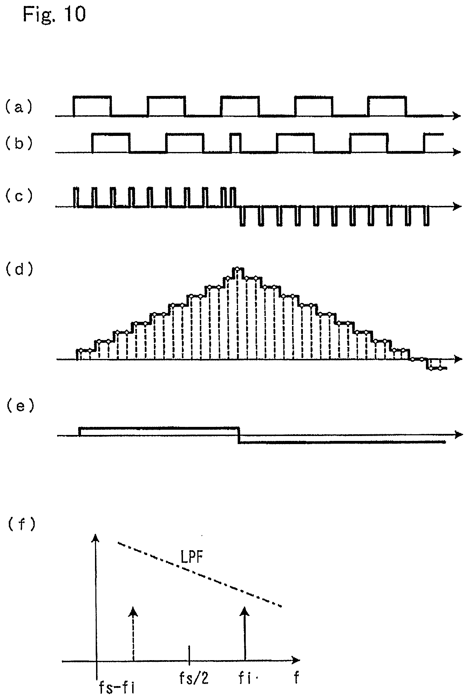

Figs. 9 and 10 are explanatory drawings showing an overall configuration of a conventional device 101 for measuring a velocity. By way of example, a device for measuring a revolving speed of a spinning body is now explained. In Fig. 9, an encoder 100 outputs an output signal synchronized with the revolution of a body such as a revolving shaft. For example, an incremental encoder outputs two-phase output signals, i.e., an A-phase signal and a B-phase signal (Figs. 10a and 10b). The relationship between their phases differs depending on the direction of the revolution. Thus, the direction of the revolution can be detected from the relationship between the phases of the two-phase signals.

A counting part 102 counts the signals output from the encoder. Counting the signals can be carried out by counting the pulses in the pulse train signal (Fig. 10c) that are obtained at the edges of the signals output from the encoder by a counter. Fig. 10d shows a counted value.

A sampling part 103 samples counted values output from the counting part 102 at predetermined time intervals. A part 104 for detecting differentials outputs the temporal changing rate of the sampled values (shown by circles in Fig. 10d) as a velocity (Fig. 10e).

Since a value obtained by counting pulses in a pulse train signal in a predetermined period corresponds to the frequency of the signal, measurement of such a frequency by using such a value is well-known. The information about the frequency of the pulse train signal is in the low frequency component in the frequency spectrum of the value. Therefore, it is well-known to pick out the low frequency component by eliminating the higher harmonic component caused by a quantization error by using a low pass filter (Patent Literature 1; Japanese Patent Publication of Examined Application No. 2009-250807). Further prior art can be found in, e.g., US 5,500,585, which generally relates to a device for detecting the speed and direction of a movable component using a simple signal line.

### Summary of the Invention

A conventional method generates noises such as quantization errors when a signal output from an encoder is sampled. If a velocity is measured based on the signal that includes the noises, it cannot be measured with a high accuracy because the signal is caused to fluctuate by the noise components. The quantization noise can be eliminated by a low pass filter, because the frequency of the noise is higher than the frequency (fi) of the pulse train signal output from the encoder.

However, an alias-component, which is generated by sampling, exists in a low frequency band. Accordingly, the component cannot be eliminated by the low pass filter. Fig. 10f shows the relationship among the frequency (fᵢ) of the signal to be encoded, the sampling frequency (fₛ), and the frequency (fₛ-fᵢ) of the alias.

Since the frequency (fₛ-fᵢ) of the aliases is less than the frequency (fᵢ) of the signal to be encoded, a low pass filter (LPF) cannot eliminate the frequency component of the alias that has the frequency (fₛ-fᵢ). The dashed line in Fig. 10f shows the characteristics of the low pass filter (LPF).

The invention of this application aims to resolve the above problem, i.e., to easily suppress the components of a quantization noise and an aliasing noise when a velocity is measured based on an output from an encoder.

The invention of this application does not carry out a conventional process in which the values got by counting the pulse train signal are sampled and then the signal composed of the sampled values is passed through a low pass filter. But instead it converts a two-phase encoded signal that indicates a movement of a spinning body to a ternary pulse train signal. Then, it directly causes the ternary pulse train signal to pass through a low pass filter, and obtains a velocity signal by sampling the signal having been passed through the filter.

This invention, for measuring a velocity, causes a pulse train signal to directly pass through a low pass filter and thus reduces the high frequency components of the pulse train signal. Thus, it can reduce the alias components induced by the subsequent process for sampling the signal.

The device for measuring a velocity of this invention comprises a part for pulse-converting that converts two-phase signals to a ternary pulse train signal having a positive or a negative or a zero value corresponding to the phases of the two-phase signals, a low pass filter that outputs a low frequency component of the pulse train signal by means of arithmetical processing between the ternary pulse train signal and filter coefficients, and a part for output-sampling that samples the signal output from the low pass filter at a predetermined sampling period and outputs a velocity signal corresponding to the velocity determined by the two-phase signal.

The two-phase signal is an encoded pulse train obtained by an encoder. The relationship between the phases of the two-phase signals is the following: one of the phases is advanced or delayed in relation to the other, depending on the direction of a movement of an object such as the direction of a revolution. From the relationship, the information on the direction of the revolution, etc., can be obtained.

The part for pulse-converting converts two-phase signals to an up and down pulse train signal having a positive or a negative or a zero value corresponding to the relationship between the phases of the two-phase signals. The pulse train signal can be made by detecting the edge portions of the two-phase signals. A positive or negative sign can be determined by the change of the relationship between the phases of the two-phase signals.

The low pass filter is a digital filter. The filter reduces the high frequency components in a pulse train signal, allows low frequency components in the signal to pass through, and obtains velocity signal components, by using an arithmetical processing that carries out a convolution (operation for convolution) between the pulse train signal and the filter coefficients. The part for output-sampling samples the signal output from the low pass filter at a predetermined sampling period. The process for causing low frequency components to pass through the low pass filter and the process for sampling at the part for sampling result in outputting a velocity signal corresponding to the velocity determined by the two-phase signal.

By the process for sampling, measuring a velocity is carried out. That velocity corresponds to the pulse density of the pulse train signal within a certain sampling period. The sampling period can be arbitrarily set depending on the pulse density. For example, if the pulse density of the pulse train signal is high and the intervals between the pulses in a pulse train signal are short, the pulse train signal may sharply change in a short time. In such a case, the sampling period should be set to be short. In contrast, if the pulse density of the pulse train signal is low and the intervals between signals in a pulse train signal are long, the pulse train signal cannot sharply change in a short time. In such a case, the sampling period can be set to be long.

### (An Embodiment of the Low Pass Filter)

The low pass filter carries out an arithmetical process that picks out the low frequency component by eliminating the high frequency component. The process carries out a convolution (operation for convolution) between the pulse train signal and the filter coefficients. The filter coefficients can be, say, coefficients in a FIR filter.

The low pass filter comprises a counting part, a part for input-sampling, a multiplexer, an adder and a subtracter, a part for storing filter coefficients, and a part for storing the results. The counting part outputs timing signals. The part for input-sampling samples a pulse train signal. The multiplexer carries out a process for selecting signals. The part for storing filter coefficients outputs filter coefficients that are to be used for arithmetical processing in the adder and the subtracter. The part for storing the results stores the results of the convolution between the pulse train signal or the result of the arithmetical processing and the filter coefficients.

The counting part outputs a readout signal, an input-sampling signal, and an output-sampling signal having a sampling period, as a timing signal. The readout signal has a predetermined cycle. The input-sampling signal is synchronized with and has the same phase as the readout signal. The timing signal is used for arithmetical processing, etc. Also, the counting part can output a reset signal. The reset signal has a sampling period synchronized with the output-sampling signal.

The part for input-sampling samples the pulse train signal based on the input-sampling signal, and inputs the sampled signal into the multiplexer.

The part for storing filter coefficients stores filter coefficients that have been previously set. The part reads out the filter coefficients when the part receives the readout signal and then outputs the coefficients to the adder and the subtracter, so as to set the filter coefficients for the low pass filter.

The adder adds the filter coefficients that are read out from the part for storing the filter coefficients to the signal output from the part for storing the results. The subtracter subtracts the filter coefficients, which are read out from the part for storing the filter coefficients, from the signal output from the part for storing the results.

The multiplexer receives the pulse train signal as a control signal for selection. Based on the signal, it outputs one of the two signals from the adder and the subtracter, or outputs the same signal that is output from the part for storing the results.

When the pulse train signal is positive, the multiplexer selects and outputs the signal output from the adder, among the signals input to the multiplexer, i.e., among the signal output from the subtracter, the signal output from the subtracter, and the signal output from the part for storing the results. When the pulse train signal is negative, it selects and outputs the signal output from the subtracter. When the pulse train signal is zero, it selects and outputs the signal output from the part for storing the results. This process is carried out under the condition that the input-sampling signal is synchronized with the readout signal, and repeated while the filter coefficients are being read out in sequence. Thus, a convolution (operation for convolution) between the pulse train signal and the filter coefficients is carried out.

When a FIR filter is used, the part for storing the results can carry out the convolution (operation for convolution) for every sampling period, by resetting the result of the convolution at every sampling period by using a reset signal synchronized with the output-sampling signal.

If a FIR filter (finite impulse response filter) is configured as a low pass filter, the counting part includes a reset signal, as a timing signal, for resetting a sampling period. An adder adds filter coefficients read out from a part for storing filter coefficients to a signal output from a part for storing the results. A subtracter subtracts filter coefficients read out from the part for storing filter coefficients from a signal output from the part for storing the results. A part for storing the results resets the result of the convolution at every sampling period by using a reset signal.

A part for output-sampling samples a signal output from the multiplexer at every sampling period at the time of the output-sampling signal, and outputs the sampled signal as a velocity signal.

By the low pass filter of the invention of this application, filter coefficients that are used for a convolution at the low pass filter are stored in a part for storing filter coefficients. Therefore, the coefficients can be easily changed and the change of the characteristics of the filter can easily be made.

The low pass filter of the invention of this application is configured to combine an adder, a subtracter, and a multiplexer. By inputting filter coefficients to the adder or the subtracter, a convolution between a pulse train signal and the filter coefficients can be carried out with no multiplier.

The device for measuring a velocity of the invention of this application has multiple sets of combinations of low pass filters, which receive a common pulse train signal, and parts for output-sampling. The signals that are obtained from the respective combinations of the low pass filters and the parts for output-sampling and that have different phases are combined and used. Thus, the number of times of sampling can be substantially increased and the accuracy of measurements can be increased.

The multiple sets of the combinations of the low pass filters and the parts for output-sampling may be at least two sets.

A common pulse train signal from the part for pulse-converting is entered into each low pass filter in each set. Each part for input-sampling samples the pulse train signal based on an input-sampling signal, and then the sampled signal is output. The input-sampling signals for the respective parts are synchronized and have different phases.

The parts for storing filter coefficients in the low pass filters in the respective sets read out the filter coefficients based on the respective readout signals. The readout signal in the same low pass filter is synchronized with and has the same phase as the input-sampling signals. The readout signals in the different low pass filters are synchronized with but have different phases from the input-sampling signals.

An adder and a subtracter in each set adds or subtracts filter coefficients read out from the part for storing filter coefficients in the set to or from the signal output from a part for storing results of an arithmetical process. Then the signals output from respective parts for output-sampling are added in time series and the result is output.

The pulse train signal is sampled by each input-sampling signal that is synchronized with, but has different phases from, the corresponding signals in the other sets. And each filter coefficient is read out based on each readout signal, which is synchronized with but has a different phase from the corresponding signals in the other sets. The respective convolutions between the pulse train signal and the filter coefficients are carried out. Thus output signals having different phases are obtained. The output signals are based on the signals that are sampled by signals having different phases. Therefore, the output signals are substantially equivalent to those obtained by a shorter sampling period.

The phase-difference may be, say, a time interval obtained by equally dividing a sampling period. For example, it may be a half of a sampling period, or 1/3 of a sampling period.

### (Method for Measuring a Velocity)

A method for measuring a velocity comprises a step for converting, a step for low pass filtering, a step for output-sampling, and a step for outputting. In the step for converting, two-phase signals are converted to a ternary pulse train signal having a positive or a negative or zero value corresponding to the phases of the two-phase signals. In the step for low pass filtering, a low frequency component of the pulse train signal is obtained by means of arithmetical processing between the ternary pulse train signal and filter coefficients. In the step for output-sampling, the signal obtained by the step for low pass filtering is sampled at a predetermined sampling period. In the step for outputting, the sampled signal by the step for output-sampling is output as a velocity signal corresponding to the velocity determined by the two-phase signal.

In the step for low pass filtering, the pulse train signal is sampled at a predetermined period, and a convolution (operation for convolution) between the pulse train signal and the filter coefficients is carried out based on the sampled pulse train signal.

The convolution is a combination of adding and subtracting, in which a filter coefficient is added when the ternary pulse train signal is positive, and a filter coefficient is subtracted when the pulse train signal is negative. Reading the filter coefficients is synchronized with and has the same phase as sampling the pulse train signal.

In the step for output-sampling the result of the convolution is sampled at the sampling period and output as a velocity signal.

A method for measuring a velocity has multiple sets of combinations of a step for low pass filtering and a step for output-sampling. The step for low pass filtering uses a common pulse train signal. The outputs that have different phases and that are obtained by the respective combinations of the steps for low pass filtering and the step for output-sampling are combined. Thus, the number of times of sampling can be substantially increased and an output that is sampled by a shorter sampling period can be obtained.

In the sets of combinations of the step for low pass filtering and the step for output-sampling, for low pass filtering in the same set sampling the pulse train signal is synchronized with and has the same phase as reading the filter coefficients for the convolution. For filtering in different sets, sampling the signal is synchronized with but has a different phase from reading the coefficients.

The invention of this application can be applied not only to measuring a velocity of a spinning body but also to measuring a velocity of a linearly moving body.

### (Advantageous Effects of Invention)

As above, the device for measuring a velocity of this invention does not include any integrating process. Therefore, the device can supress quantization noises caused by integrating quantization errors. Also, it can prevent the generation of aliases in a process for sampling.

### Brief Description of Drawings

Fig. 1 is an illustration of an outline of a device for measuring a velocity of the invention of this application.
Fig. 2 is an illustration of the relationships between signals in a device for measuring a velocity of the invention of this application.
Fig. 3 is an illustration of an exemplary configuration of a device for measuring a velocity of the invention of this application.
Fig. 4 is an illustration of the relationships between signals in an exemplary configuration of a device for measuring a velocity of the invention of this application.
Fig. 5 is an illustration of a second exemplary configuration of a device for measuring a velocity of the invention of this application.
Fig. 6 is an illustration of a second exemplary configuration of a device for measuring a velocity of the invention of this application.
Fig. 7 is an illustration of an example for measuring a velocity in accordance with the invention of this application.
Fig. 8 is an illustration of an example for measuring a velocity in accordance with the invention of this application.
Fig. 9 is an illustration of an outline of a conventional device for measuring a velocity.
Fig. 10 is an illustration of relationships between signals in a conventional device for measuring a velocity.

### Description of Embodiments

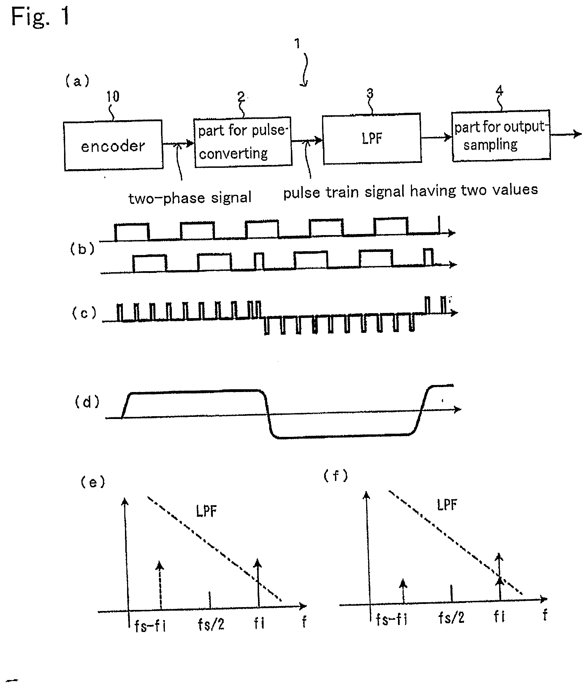

Now, the embodiments of this invention are described in detail, with reference to the drawings. Below, an exemplary configuration of a device for measuring a velocity of this invention is described, with reference to Figs. 1 - 8.

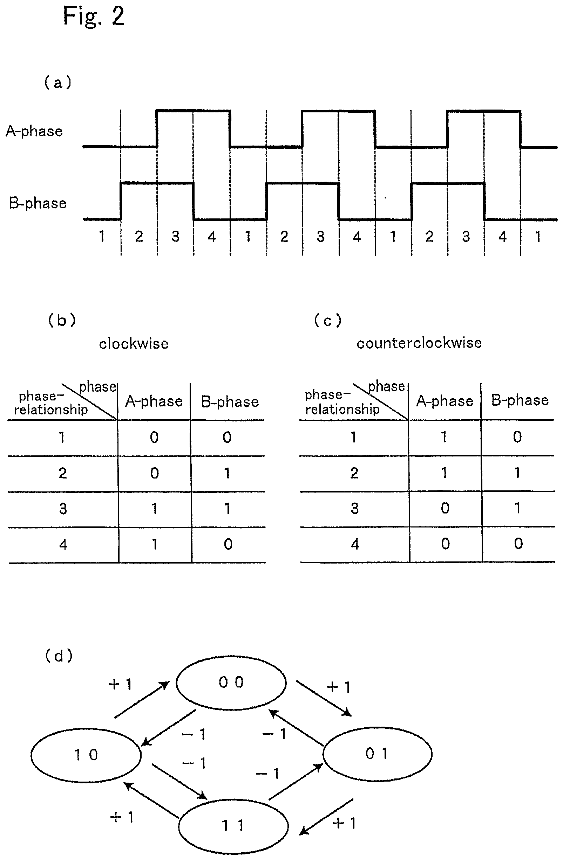

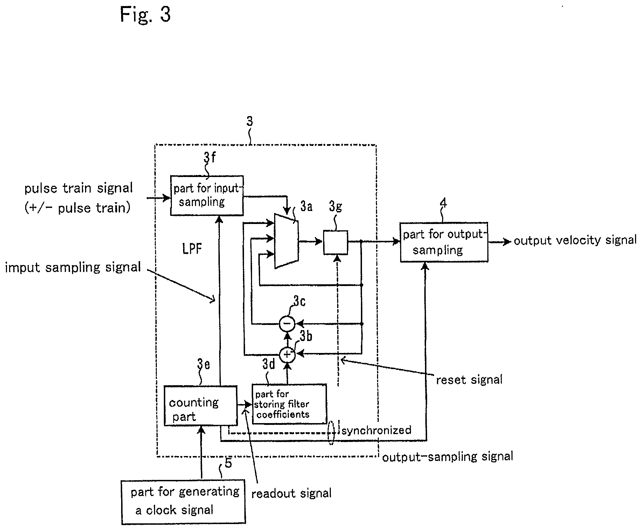

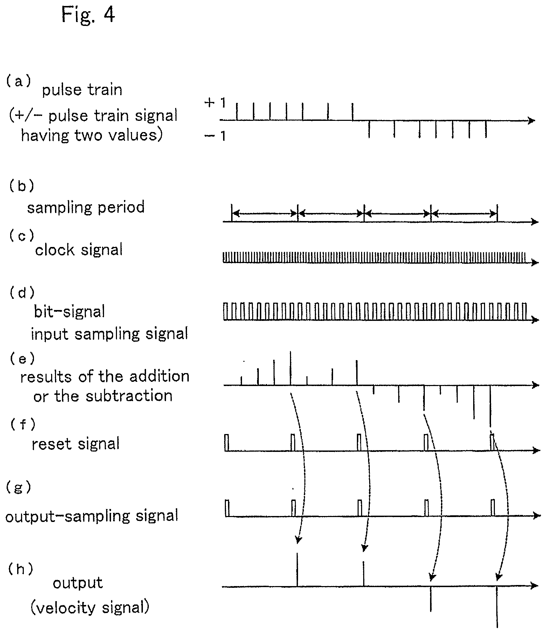

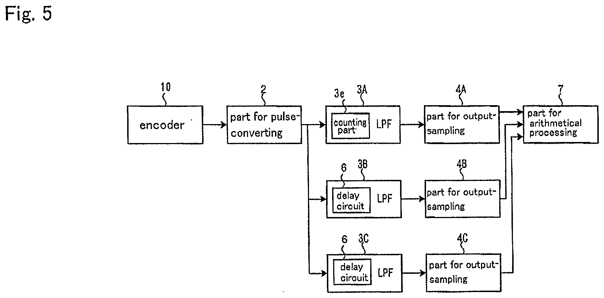

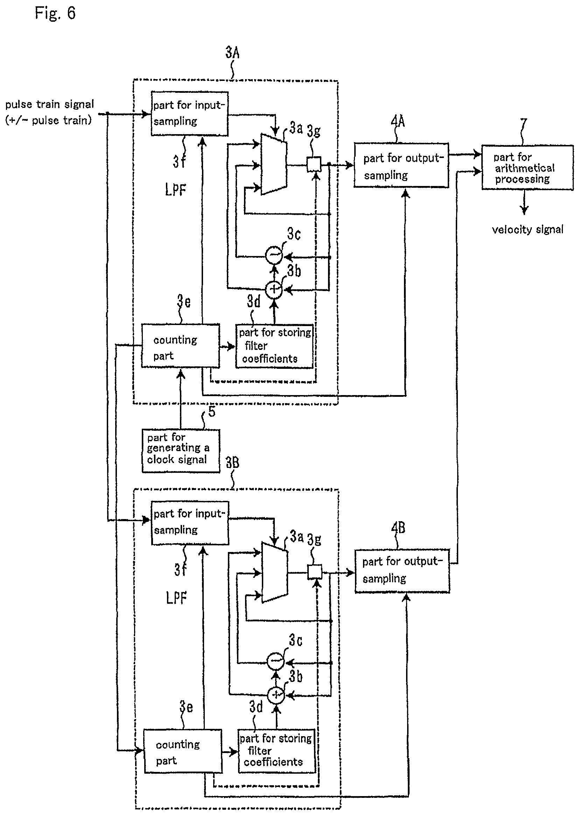

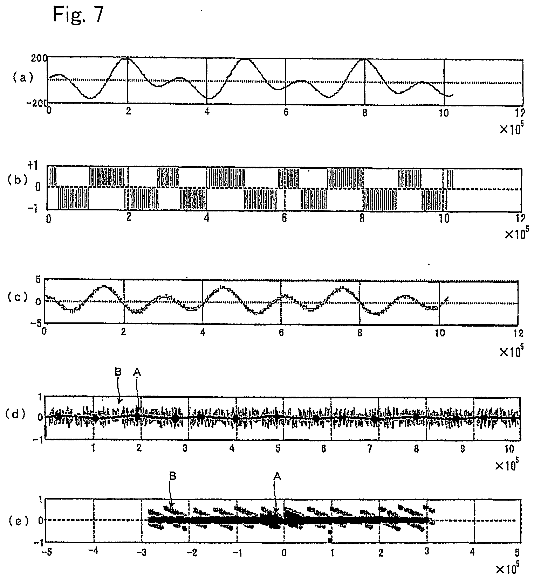

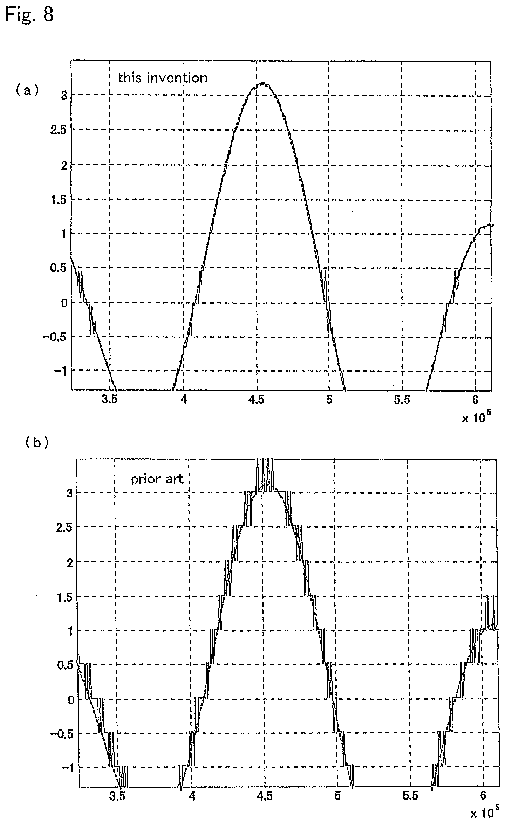

Figs. 1 and 2 are illustrations of an outline of, and the relationships between signals in, a device for measuring a velocity of the invention of this application. Figs. 3 and 4 illustrate the first exemplary configuration of a device for measuring a velocity of the invention of this application, and the relationships between the signals in the device. Figs. 5 and 6 are illustrations of a second exemplary configuration of a device for measuring a velocity of the invention of this application. Figs. 7 and 8 are illustrations of an example for measuring a velocity in accordance with the invention of this application.

### (A Configuration of a Device for Measuring a Velocity)

Now, an outline of a device for measuring a velocity of the invention of this application is described, with reference to Figs. 1 and 2. As in Fig. 1a, in a device for measuring a velocity 1 of the invention of this application, an encoder 10 outputs two-phase encoded pulse train signals synchronized with a spinning body such as a rotating shaft. One of the two-phase encoded pulse train signals has a phase leading to, or lagging from, the other, depending on the direction of the movement, e.g., the direction of revolution. Based on the relationship between the phases, such information as the direction of the revolution can be obtained.

Part 2 for pulse-converting converts the signals to an up and down pulse train (+/- pulse train) signal that has three values, i.e., positive, negative, and zero. For example, the pulse train signal can be generated by detecting the edges of the two-phase signals. The sign, i.e., positive, negative, or zero, of the signal, can be obtained based on the change of the relationship between the phases.

Fig. 2 has illustrations explaining the pulse-converting. Fig 2a shows one example of encoded pulse trains having an A-phase and a B-phase, each of which has a different phase. There are four relationships between the A-phase and the B-phase. Fig 2a shows the relationships by the numbers 1 - 4.

The relationship between the A-phase and the B-phase has a different mode of shifting, depending on the direction of the movement. Figs. 2b and 2c show the relationships corresponding to each direction of a revolution. Fig. 2b shows the relationships of the phases when the spinning body is rotating clockwise. Fig. 2c shows the relationships of the phases when the spinning body is rotating counterclockwise.

Part 2 for pulse-converting converts the encoded pulses having the A-phase and the B-phase to an up and down pulse train (+/- pulse train) signal that has three values, i.e., positive, negative, and zero. For example, when the relationship between the A-phase and the B-phase is changed from the respective phases of (0, 0) to those of (0, 1), a "+1" pulse is output as the pulse train signal. In contrast, when the relationship is changed from the respective phases of (0, 1) to those of (0, 0), a "-1" pulse is output as the pulse train signal.

Fig. 1b shows encoded pulses and Fig. 1c shows a pulse train signal (+/- pulse train) processed by the pulse-converting.

A low pass filter (LPF) 3 directly receives the pulse train signal that has been converted by part 2 for pulse-converting. It carries out an arithmetical process between the signal and filter coefficients and allows the low frequency component that is included in the pulse train signal to pass. Thus, it extracts a velocity signal component. Part 4 for output-sampling samples the signal output from the low pass filter 3 at a predetermined sampling period. The process for allowing low frequency components to pass through the low pass filter 3 and the process for sampling by the part 4 for output-sampling causes a velocity signal (Fig. 1d) corresponding to the velocity indicated by the two-phase signal to be output.

Figs. 1e and 1f illustrate how the reductions in the alias components differ by changing the procedures for low pass filtering and for sampling. Fig. le illustrates a conventional process in which sampling is carried out before low pass filtering is completed. Fig. 1f illustrates a process of the invention of this application in which low pass filtering is carried out before sampling is done. As in Fig. 1e, if the low pass filtering is carried out after the sampling is done, the low pass filtering (LPF) (shown by a dashed line) cannot reduce alias components at a frequency (fₛ-fᵢ) (shown by a dotted line) generated by the sampling.

In contrast, as in Fig. 1f, if the sampling is carried out after the low pass filtering is done, since the low pass filter (LPF) (shown by a dashed line) reduces certain signal components, alias components at a frequency (fₛ-fᵢ) (shown by a dotted line) generated by the subsequent sampling can be reduced.

### (First Embodiment of the Device for Measuring a Velocity of the Invention of this Application)

Now, the first embodiment of the invention of this application is described, with reference to Figs. 3 and 4. Fig. 3 illustrates the exemplary configuration of a low pass filter 3 that is included in a device for measuring a velocity. The exemplary configuration in Fig. 3 is a FIR filter.

The low pass filter 3 carries out a convolution (operation for convolution) between a pulse train signal (+/- pulse train) and filter coefficients. The filter coefficients can be, say, coefficients in a FIR filter.

The low pass filter 3 comprises a part 3f for input-sampling, a counting part 3e, a part 3d for storing filter coefficients, a multiplexer 3a, an adder 3b, a subtracter 3c, and a part 3g for storing the results. The part 3f for input-sampling samples the pulse train signal and takes the sampled signal. The counting part 3e outputs a readout signal having a predetermined period, an input-sampling signal synchronized with and having the same phase as the readout signal, an output-sampling signal having a sampling signal, and a reset signal synchronized with the output-sampling signal, as timing signals for arithmetic processes, etc. The part 3d for storing filter coefficients receives the readout signal from the counting part 3e as a timing signal and sequentially reads out filter coefficients at a predetermined period, and outputs them. The multiplexer 3a outputs one of three input signals using a pulse train signal as a control signal for a selection. The adder 3b adds the filter coefficients read out from the part 3d to the output from the part 3g. The subtracter 3c subtracts the filter coefficients read out from the part 3d from the output from the part 3g. The part 3g stores the result of the convolution between the pulse train signal and the filter coefficients.

The counting part 3e can generate a readout signal and an input-sampling signal having a predetermined period based on the clock signal from a part 5 for generating a clock signal. The part 3e also can generate an output-sampling signal and a reset signal having a sampling period.

The multiplexer 3a selects the output from the adder 3b, i.e., the result of the addition, and outputs it, if the pulse train signal is positive. If the pulse train signal is negative, the multiplexer 3a selects the output from the subtracter 3c, i.e., the result of the subtraction, and outputs it. If the pulse train signal is zero, the multiplexer 3a selects the value in the part for storing the results and outputs it. The part 4 for output-sampling receives the output-sampling signal as a timing signal and samples the output from the multiplexer 3a. By sampling at the sampling period, the part 4 obtains the result of the arithmetic process for all the filter coefficients and then outputs a velocity signal.

The part 3f for input-sampling receives the input-sampling signal as a timing signal, samples the pulse train signal having 2 values, and sends the result to a multiplexer 3a. The part 3d for storing filter coefficients reads out the filter coefficients that have been stored based on the readout signal, and sends them to the adder 3b and the subtracter 3c.

The input-sampling signal is synchronized with and has the same phase as the readout signal. Thus, sampling the pulse train signal and the convolution can be carried out with the same timing as the clock signal.

The counting part 3e outputs a reset signal to a part 3g for storing the results at a sampling period. The reset signal causes the part 3g to start the convolution from the beginning of the sampling period and to finish it at the end of the period. In this way, the convolution is carried out during the sampling period, i.e., the period is a unit for the convolution. Thus, a velocity signal during each sampling period can be obtained.

Fig. 4a is an exemplary illustration of a pulse train signal (+/- pulse train). A change from a positive (+1) value to a negative (-1) value shows that the direction of movement (the direction of revolution) has changed. Fig. 4b is an illustration of sampling pulses that shows the period for measurements. By using those pulses the part for output-sampling carries out the sampling.

Fig. 4c illustrates a clock signal. Fig. 4d illustrates a readout signal and an input-sampling signal. The readout signal and the input-sampling signal can be formed based on the clock signal. For example, by counting a predetermined number of pulses in the clock signal, those signals can be formed.

Fig. 4f illustrates a reset signal. Fig. 4g illustrates an output-sampling signal. The reset signal and the output-sampling signal are formed based on the sampling period. The reset signal is output at the same time as the output-sampling signal. Thus, the result of the convolution, which has been carried out during the sampling period, can be output and then be reset.

Fig. 4e illustrates the results of the addition or the subtraction in the convolution (operation for convolution). The convolution carries out adding the filter coefficients to the pulse train signal that exists within a sampling period or subtracting the filter coefficients from the pulse train signal that exists within a sampling period, based on whether the pulse train signal is positive or negative. In this example, the pulse train signal has one of two values, i.e., +1 or -1. The adder 3b sequentially adds N+1 filter coefficients a₀ - a_{N} to the output from the multiplexer 3a or the subtracter 3c sequentially subtracts N+1 filter coefficients a₀ - a_{N} from the output from the multiplexer 3a, and then the result within the corresponding sampling period is output.

Fig. 4h illustrates the fact that the result of the convolution is output with the same timing as the output sampling, i.e., at the sampling period. The output value corresponds to the velocity signal.

### (Second Embodiment of the Device for Measuring a Velocity of the Invention of this Application)

Now, the second embodiment of the invention of this application is described, with reference to Figs. 5 and 6. The second exemplary configuration is composed of a plurality of combinations of low pass filters and parts for output-sampling. The outputs from the respective combinations having different phases are combined, and thus the number of times of sampling is substantially increased. Therefore, an output that is sampled by a shorter sampling period is obtained.

As in Fig. 5, the second exemplary configuration is composed of a plurality of parallel combinations of low pass filters 3 and parts 4 for output-sampling that are illustrated in the first exemplary configuration. The pulse train signal converted by the part 2 for pulse-converting is input to each combination of the filter 3 and the part 4.

Fig. 5 illustrates an example that is composed of three combinations of low pass filters 3 and parts 4 for output-sampling. Namely, it shows the combinations of a low pass filter 3A and a part 4A for output-sampling, a low pass filter 3B and a part 4B for output-sampling, and a low pass filter 3C and a part 4C for output-sampling.

In the respective low pass filters 3A, 3B, 3C, at the parts for input-sampling, which sample a pulse train signal, the phases of input-sampling signals are shifted so that the respective samplings have a different timing. Also, the phases of the readout signals are shifted so that the respective timings for reading-out differ from each other. Then the signals that are obtained by using those shifted phases are combined and thus the number of times for sampling is substantially increased. If it is composed of the three low pass filters 3A, 3B, 3C, the respective phases of the input-sampling signals and the respective phases of the readout signals can be shifted by 1/3 period from each other. The means for shifting the input-sampling signals and the readout signal can use, say, delay circuits.

The output from each part 4A, 4B, or 4C is input to a part 7 for arithmetical processing, and the part 7 outputs a velocity signal. For example, the part 7 sequentially outputs the outputs from the parts 4A, 4B, and 4C without modification. Or, the part 7 processes the outputs at each period for measurement in a time series and calculates the sum or the average of the outputs at each period.

Now, the third embodiment of the invention of this application is described, with reference to Fig. 6. The embodiment is composed of two parallel combinations of low pass filters 3 and parts 4 for output-sampling.

Fig. 6 illustrates an example that is composed of two parallel combinations, i.e., a combination of a low pass filter 3A and a part 4A for output-sampling and a combination of a low pass filter 3B and a part 4B for output-sampling.

The configuration of the filter 3A and the part 4A, and the low pass filter 3B and the part 4B, in Fig. 6, is almost similar to the configuration illustrated in Fig. 3. But the signals input to the respective counting parts 3e differ.

The counting part 3e of the low pass filter 3A receives a clock signal from a part 5 for generating a clock signal. Based on the period and the phase of the signal, the part 3e generates a readout signal and an input-sampling signal having a predetermined period. Also, it generates a reset signal and an output-sampling signal having a predetermined period for measurement.

The counting part 3e of the low pass filter 3B has a delay circuit 6. The delay circuit 6 shifts the signal in the counting part 3e of the filter 3B. Based on the phase-shifted signal, a readout signal and an input-sampling signal are generated. Also, a reset signal and an output-sampling signal having a predetermined period for measurement are generated.

In accordance with the example of Fig. 6, the delay circuit 6 forms a phase difference by delaying the phase of the readout signal and the input-sampling signal by a half period.

### (An Example for Measuring a Velocity of the Invention of this Application)

Now, an example for measuring a velocity of the invention of this application is described, with reference to Figs. 7 and 8.

Fig. 7a shows a pulse train output from an encoder using counted values. Fig. 7b shows a pulse train signal (+/- pulse train) output from a part for pulse-converting. The positive parts of the pulse train signal correspond to the periods in which the counted values output from the encoder are increasing. The negative parts of the pulse train signal correspond to the periods in which the counted values output from the encoder are decreasing.

Fig. 7c shows velocities measured by the invention of this application and velocities measured by a conventional method. Fig. 8 shows an enlarged view of Fig. 7c.

Fig. 8a shows an example of a velocity signal that can be obtained by the first embodiment of the invention of this application. Fig. 8b shows an example of a velocity signal that can be obtained by a conventional way, i.e., by detecting the differences between sampled values. The dotted line shows the true velocities.

The example of the velocity signal in Fig. 8 shows that noise components caused by aliases, etc., can be significantly suppressed compared to noise components generated in a conventional device.

Fig. 7d shows the error between the velocity at the input signal from the encoder and the output signal, from the measured velocity. B shows the error obtained by a conventional device for measuring a velocity. A shows an error obtained by a device for measuring a velocity by using the invention of this application. By the invention of this application, the error is found to be decreased.

Fig. 7e shows the relationship between the error and the velocity. The error is between the velocity measured at the input signal from the encoder and the velocity of the output signal that is measured. The letter B shows the relationship between the error and the velocity, in which the measured velocity is obtained by a conventional device for measuring a velocity. The letter A shows the relationship between the error and the velocity, in which the measured velocity is obtained by a device for measuring a velocity by using the invention of this application. The horizontal axis of Fig. 7e shows the velocity and the vertical axis shows the error. Fig. 7e shows that by the conventional device for measuring a velocity, the errors between the input signal and the output signal exist independently from the velocity. In contrast, by the device for measuring a velocity by using the invention of this application, the errors between the input signal and the output signal only exist where the velocity is approximately zero and the direction of the movement is changed. The errors can be ignored when the velocity is not zero.

The invention of this application is not limited to the embodiments described above. It can be modified based on the philosophy of this invention, and the modified inventions should not be excluded from the scope of this invention.

### (Industrial Applicability)

The device for measuring a velocity of this application can be applied not only for measuring a revolving speed, but also for measuring a velocity of an object moving on a line or on a curve.

### (Reference List)

- 1: device for measuring a velocity
- 2: part for pulse-converting
- 3: low pass filter
- 3A C3B C3C: low pass filter
- 3a: multiplexer
- 3b: adder
- 3c: subtracter
- 3d: part for storing filter coefficients
- 3e: counting part
- 3f: part for input-sampling
- 3g: part for storing the results
- 4: part for output-sampling
- 4A C4B C4C: part for output-sampling
- 5: part for generating a clock signal
- 6: delay circuit
- 7: part for arithmetical processing
- 10: encoder
- 100: encoder
- 101: device for measuring a velocity
- 102: counting part
- 103: sampling part
- 104: part for detecting differentials

## Claims

1. A device (1) for measuring a velocity comprising:
a part (2) for pulse-converting configured to convert two-phase signals to a ternary pulse train signal having a positive or a negative or a zero value corresponding to the phases of the two-phase signals,
a low pass filter (3) for supressing components of quantisation noise in the ternary pulse train signal, the low pass filter being configured to output a low frequency component of the pulse train signal by means of arithmetical processing between the ternary pulse train signal and filter coefficients, wherein the low pass filter is a digital filter configured such that the arithmetical processing at the low pass filter is a convolution between the ternary pulse train signal and the filter coefficients in which the ternary pulse train signal is sampled at a first predetermined sampling period and a filter coefficient is added when the sampled ternary pulse train signal is positive, and a filter coefficient is subtracted when the sampled ternary pulse train signal is negative, wherein reading the filter coefficients is synchronized with sampling the ternary pulse train signal, and
a part (4) for output-sampling configured to sample the result of the convolution at a second predetermined sampling period and configured to output the sampled result as a velocity signal corresponding to the velocity determined by the two-phase signal.

2. The device for measuring a velocity of claim 1, wherein the low pass filter comprises:
a counting part (3e) configured to output, as timing signals, a readout signal having the first predetermined sampling period, an input sampling signal synchronized with the readout signal and having the same phase as that of the readout signal, and an output sampling signal having the second predetermined sampling period,
a part (3f) for input-sampling configured to sample the ternary pulse train signal based on the input sampling signal,
a part (3d) for storing filter coefficients configured to store the filter coefficients and configured to read the respective filter coefficients responding to the readout signal,
a multiplexer (3a) configured to output one of three input signals by using the ternary pulse train signal as a signal for selection,
an adder (3b) configured to add a filter coefficient read from the part for storing filter coefficients,
a subtracter (3c) configured to subtract a filter coefficient read from the part for storing filter coefficients, and
a part (3g) for storing the results configured to store the results of the convolution between the pulse train signal and the filter coefficients, wherein the multiplexer is configured to select a signal and output the selected signal from among the input signals, i.e., from among the output signal from the adder, the output signal from the subtracter, and the output signal from the part for storing the results, wherein
the multiplexer is configured to select the output signal from the adder and output it when the pulse train signal is positive, to select the output signal from the subtracter and output it when the pulse train signal is negative, and to select the output signal from the part for storing the results when the pulse train signal is zero and to output it, and wherein
the part for storing the results is configured to sample the output signal from the multiplexer at the second predetermined sampling period and output it as a velocity signal.

3. The device for measuring a velocity of claim 2, wherein
the low pass filter makes up an FIR filter,
the counting part is configured to output a reset signal having the second predetermined sampling period as one of the timing signals,
the adder is configured to add the filter coefficient read from the part for storing filter coefficients to the output signal from the part for storing the results,
the subtracter is configured to subtract the filter coefficient read from the part for storing filter coefficients from the output signal from the part for storing the results, and wherein
the part for storing the results is configured to reset the result of the convolution at the second predetermined sampling period.

4. The device for measuring a velocity of claim 2 or 3, wherein
the device comprises at least two sets of combinations of the low pass filter and the part for output-sampling,
the low pass filter in each set is configured to receive a common ternary pulse train signal from the part for pulse-converting,
the part for input-sampling in each set is configured to sample the ternary pulse train signal based on the input-sampling signal that is synchronized with and has a phase different from those in the other low pass filters, and is configured to receive the sampled signal,
the part for storing filter coefficients in each set is configured to read filter coefficients based on the read-out signal wherein the read-out signal is synchronized with and has the same phase as the input-sampling signal in the same low pass filter and wherein the readout signal is synchronized with and has a phase different from the input-sampling signals in the other low pass filters,
the adder and the subtracter in each set respectively are configured to add and to subtract a filter coefficient read from the part for storing filter coefficients in each set, and wherein
the device is configured to arithmetically process the output signals from the respective parts for output-sampling in sequence or in combination, and is configured to output the results.

5. A method for measuring a velocity comprising:
a step for converting in which two-phase signals are converted to a ternary pulse train signal having a positive or a negative or a zero value corresponding to the phases of the two-phase signals,
a step for low pass filtering for supressing components of quantisation noise in the ternary pulse train signal, using a digital filter, in which a low frequency component of the pulse train signal is obtained by means of arithmetical processing between the ternary pulse train signal and filter coefficients, wherein the ternary pulse train signal is sampled at a first predetermined sampling period, a convolution between the pulse train signal and the filter coefficients is carried out based on the sampled ternary pulse train signal and, in the convolution, a filter coefficient is added when the sampled ternary pulse train signal is positive, and a filter coefficient is subtracted when the sampled ternary pulse train signal is negative, wherein reading the filter coefficients is synchronized with sampling the ternary pulse train signal,
a step for output-sampling in which the result of the convolution is sampled at a second predetermined sampling period, and
a step for outputting in which the sampled result of the convolution is output as a velocity signal corresponding to the velocity determined by the two-phase signal.

6. The method for measuring a velocity of claim 5, wherein
the method has a plurality of sets of combinations of the step for low pass filtering and the step for output-sampling wherein a common pulse train signal is input in the respective sets of the combinations,
in the same step for low pass filtering, sampling the pulse train signal is synchronized with and has the same phase as reading the filter coefficients for the convolution, and wherein
between the steps for low pass filtering, sampling the pulse train signal in one of the steps is synchronized with and has a different phase from reading the filter coefficients for the convolution in any other of the steps.

## Patentansprüche

1. Ein Gerät (1) für das Messen einer Geschwindigkeit, umfassend:
Ein Teil (2) für die Impulswandlung, das konfiguriert ist, zweiphasige Signale in ein dreifaches Impulsfolgesignal mit einem positiven oder einem negativen oder einem Nullwert umzuwandeln, die den Phasen der zweiphasigen Signale entsprechen,
einen Tiefpassfilter (3) für das Unterdrücken von Komponenten des Quantenrauschens in dem dreifachen Impulsfolgesignal, wobei der Tiefpassfilter konfiguriert ist, eine Niederfrequenzkomponente des Impulsfolgesignals mittels arithmetischer Verarbeitung zwischen dem dreifachen Impulsfolgesignal und den Filterkoeffizienten auszugeben, wobei der Tiefpassfilter ein digitaler Filter ist, der so konfiguriert ist, dass die arithmetische Verarbeitung am Tiefpassfilter eine Überlagerung zwischen dem dreifachen Impulsfolgesignal und den Filterkoeffizienten ist, in denen das dreifache Impulsfolgesignal in einer ersten vorbestimmten Abtastperiode abgetastet wird und ein Filterkoeffizient hinzugefügt wird, wenn das abgetastete dreifache Impulsfolgesignal positiv ist, und ein Filterkoeffizient subtrahiert wird, wenn das abgetastete dreifache Impulsfolgesignal negativ ist, wobei das Ablesen der Filterkoeffizienten mit der Abtastung des dreifachen Impulsfolgesignals synchronisiert wird, und
ein Teil (4) für die Ausgangsabtastung, das konfiguriert, das Ergebnis der Überlagerung in einer zweiten vorbestimmten Abtastperiode abzutasten und konfiguriert ist, die abgetasteten Resultate als ein Geschwindigkeitssignal auszugeben, das der durch das zweiphasige Signal bestimmten Geschwindigkeit entspricht.

2. Gerät für das Messen einer Geschwindigkeit nach Anspruch 1, wobei der Tiefpassfilter Folgendes umfasst:
Ein Zählteil (3e), das konfiguriert ist, um ein Ablesungssignal als Zeitsignale mit der ersten vorbestimmten Abtastperiode auszugeben, ein Eingangsabtastsignal, das mit dem Ablesungssignal synchronisiert ist und dieselbe Phase aufweist wie das Ablesungssignal, und ein Ausgangsabtastsignal mit der zweiten vorbestimmten Abtastperiode,
ein Teil (3f) für die Eingangsabtastung, das konfiguriert ist, um das dreifache Impulsfolgesignal, basierend auf dem Eingangsabtastsignal, abzutasten,
ein Teil (3d) für die Speicherung der Filterkoeffizienten, das konfiguriert ist, die Filterkoeffizienten zu speichern und konfiguriert ist, die entsprechenden Filterkoeffizienten in Reaktion auf das Ablesungssignal, abzulesen,
einen Multiplexer (3a), der konfiguriert ist, eines der drei Eingangssignale unter Verwendung des dreifachen Impulsfolgesignals als Auswahlsignal auszugeben,
einen Addierer (3b), der konfiguriert ist, einen Filterkoeffizienten hinzuzufügen, der von dem Teil für das Speichern der Filterkoeffizienten abgelesen wird,
einen Subtrahierer (3c), der konfiguriert ist, einen Filterkoeffizienten zu subtrahieren, der von dem Teil für die Speicherung der Filterkoeffizienten abgelesen wird, und
ein Teil (3g) für das Speichern der Ergebnisse, das konfiguriert ist, die Ergebnisse der Überlagerung zwischen dem Impulsfolgesignal und den Filterkoeffizienten zu speichern, wobei der Multiplexer konfiguriert ist, ein Signal auszuwählen und das ausgewählte Signal der Eingangssignale auszugeben, d. h. aus dem Ausgangssignal vom Addierer, dem Ausgangssignal vom Subtrahierer und dem Ausgangssignal von dem Teil für das Speichern der Ergebnisse, wobei
der Multiplexer konfiguriert ist, das Ausgangssignal vom Addierer auszuwählen und auszugeben, wenn das Impulsfolgesignal positiv ist, das Ausgangssignal vom Subtrahierer auszuwählen und auszugeben, wenn das Impulsfolgesignal negativ ist, und das Ausgangssignal von dem Teil für das Speichern der Ergebnisse auszuwählen und auszugeben, wenn das Impulsfolgesignal null ist, wobei
der Teil für das Speichern der Ergebnisse konfiguriert ist, das Ausgangssignal vom Multiplexer in der zweiten vorbestimmten Abtastperiode abzutasten und als Geschwindigkeitssignal auszugeben.

3. Gerät für das Messen einer Geschwindigkeit nach Anspruch 2, wobei
der Tiefpassfilter einen FIR-Filter bildet,
das Zählteil konfiguriert ist, ein Rücksetzsignal mit der zweiten vorbestimmten Abtastperiode als eines der Ablesungssignale auszugeben,
der Addierer konfiguriert ist, den Filterkoeffizienten, der von dem Teil für das Speichern der Filterkoeffizienten abgelesen wird, dem Ausgangssignal von dem Teil für das Speichern der Ergebnisse hinzuzufügen,
der Subtrahierer konfiguriert ist, den Filterkoeffizienten, der von dem Teil für das Speichern der Filterkoeffizienten abgelesen wird, von dem Ausgangssignal von dem Teil für das Speichern der Ergebnisse zu subtrahieren, und wobei
der Teil für das Speichern der Ergebnisse konfiguriert ist, das Ergebnis der Überlagerung in der zweiten vorbestimmten Abtastperiode zurückzusetzen.

4. Gerät für das Messen einer Geschwindigkeit nach Anspruch 2 oder 3, wobei
das Gerät mindestens zwei Sätze von Kombinationen des Tiefpassfilters und des Teils für die Ausgangsabtastung umfasst,
der Tiefpassfilter in jedem Satz konfiguriert ist, ein allgemeines dreifaches Impulsfolgesignal von dem Teil für die Impulswandlung zu empfangen,
der Teil für die Eingangsabtastung in jedem Satz konfiguriert ist, das dreifache Impulsfolgesignal, basierend auf dem Eingangsabtastsignal, das mit den anderen Tiefpassfiltern synchronisiert ist und eine andere Phase aufweist als diese, abzutasten, und konfiguriert ist, das abgetastete Signal zu empfangen,
der Teil für das Speichern der Filterkoeffizienten in jedem Satz konfiguriert ist, um die Filterkoeffizienten abzulesen, basierend auf dem Ablesungssignal, wobei das Ablesungssignal mit dem Eingangsabtastsignal synchronisiert ist und dieselbe Phase aufweist wie das Eingangsabtastsignal in demselben Tiefpassfilter und wobei das Ablesungssignal mit den Eingangsabtastsignalen synchronisiert wird und eine andere Phase aufweist als die Eingangsabtastsignale in den anderen Tiefpassfiltern,
der Addierer bzw. der Subtrahierer in jedem Satz konfiguriert sind, einen Filterkoeffizienten zu addieren oder zu subtrahieren, der von dem Teil für das Speichern der Filterkoeffizienten in jedem Satz abgelesen wird, und wobei
das Gerät konfiguriert ist, die Ausgangssignale von den jeweiligen Teilen für die Ausgangsabtastung arithmetisch in Folge oder Kombination zu verarbeiten, und konfiguriert ist, die Ergebnisse auszugeben.

5. Ein Gerät für das Messen einer Geschwindigkeit, umfassend:
Einen Schritt für die Impulswandlung, bei der zweiphasige Signale in ein dreifaches Impulsfolgesignal mit einem positiven oder einem negativen oder einen Nullwert umgewandelt werden, die den Phasen der zweiphasigen Signale entsprechen,
einen Schritt für die Tiefpassfilterung für das Unterdrücken von Komponenten des Quantenrauschens in dem dreifachen Impulsfolgesignal, unter Verwendung eines digitalen Filters, bei dem eine Niederfrequenzkomponente des Impulsfolgesignals mittels arithmetischer Verarbeitung zwischen dem dreifachen Impulsfolgesignal und den Filterkoeffizienten erlangt wird, in denen das dreifache Impulsfolgesignal in einer ersten vorbestimmten Abtastperiode abgetastet wird, eine Überlagerung zwischen dem Impulsfolgesignal und den Filterkoeffizienten ausgeführt wird, basierend auf dem abgetasteten dreifachen Impulsfolgesignal und in der Überlagerung ein Filterkoeffizient hinzugefügt wird, wenn das abgetastete dreifache Impulsfolgesignal positiv ist, und ein Filterkoeffizient subtrahiert wird, wenn das abgetastete dreifache Impulsfolgesignal negativ ist, wobei das Ablesen der Filterkoeffizienten mit der Abtastung des dreifachen Impulsfolgesignals synchronisiert wird,
einen Schritt für die Ausgangsabtastung, bei der das Ergebnis der Überlagerung in einer zweiten vorbestimmten Abtastperiode abgetastet wird, und
einen Schritt für das Ausgeben, bei dem das abgetastete Ergebnis der Überlagerung als Geschwindigkeitssignal ausgegeben wird, entsprechend der Geschwindigkeit, die von dem zweiphasigen Signal bestimmt wird.

6. Verfahren für das Messen einer Geschwindigkeit nach Anspruch 5, wobei
das Verfahren eine Vielzahl von Sätzen von Kombinationen des Schrittes für die Tiefpassfilterung aufweist und den Schritt für die Ausgangsabtastung umfasst, wobei ein allgemeines Impulsfolgesignal in die entsprechenden Sätze der Kombinationen eingegeben wird,
in demselben Schritt für die Tiefpassfilterung die Abtastung des Impulsfolgesignal mit den Filterkoeffizienten für die Überlagerung synchronisiert wird und dieselbe Phase wie die Ablesung der Filterkoeffizienten für die Überlagerung aufweist, und wobei
zwischen den Schritten für die Tiefpassfilterung die Abtastung des Impulsfolgesignals in einem der Schritte mit der Ablesung der Filterkoeffizienten synchronisiert wird und eine andere Phase aufweist als die Ablesung der Filterkoeffizienten in den anderen Schritten.

## Revendications

1. Dispositif (1) pour la mesure d'une vitesse comprenant :
une partie (2) pour la conversion d'impulsion configurée pour convertir des signaux biphasés à un signal de train d'impulsion ternaire ayant une valeur positive, négative ou nulle correspondant aux phases des signaux biphasés,
un filtre passe-bas (3) pour la suppression de composantes de bruit de quantification dans le signal de train d'impulsion ternaire, le filtre passe-bas étant configuré pour émettre une composante basse fréquence du signal de train d'impulsion aux moyens de traitement arithmétique entre le signal de train d'impulsion ternaire et des coefficients de filtre, dans lequel le filtre passe-bas est un filtre numérique configuré de sorte que le traitement arithmétique au filtre passe-bas est une convolution entre le signal de train d'impulsion ternaire et les coefficients de filtre où le signal de train d'impulsion ternaire est échantillonné à une première période prédéterminée d'échantillonnage et un coefficient de filtre est ajouté lorsque le signal échantillonné de train d'impulsion ternaire est positif, et un coefficient de filtre est soustrait lorsque le signal échantillonné de train d'impulsion ternaire est négatif, dans lequel la lecture des coefficients de filtre est synchronisée avec l'échantillonnage du signal de train d'impulsion ternaire, et
une partie (4) pour l'échantillonnage de sortie configurée pour échantillonner le résultat de la convolution à une deuxième période prédéterminée d'échantillonnage et configurée pour émettre le résultat échantillonné tel que le signal de vitesse correspondant à la vitesse déterminée par le signal biphasé.

2. Dispositif pour la mesure d'une vitesse selon la revendication 1, dans lequel le filtre passe-bas comprend :
une partie de comptage (3e) configurée pour émettre, comme signaux de rythme, un signal de lecture ayant la première période prédéterminée d'échantillonnage, un signal d'échantillonnage d'entrée synchronisé avec le signal de lecture et ayant la même phase que celle du signal de lecture, et un signal d'échantillonnage de sortie ayant la deuxième période prédéterminée d'échantillonnage,
une partie (3f) pour l'échantillonnage d'entrée configurée pour échantillonner le signal de train d'impulsion ternaire sur base du signal d'échantillonnage d'entrée,
une partie (3d) pour le stockage de coefficients de filtre configurée pour stocker les coefficients de filtre et configurée pour la lecture des coefficients respectifs de filtre répondant au signal de lecture,
un multiplexeur (3a) configuré pour émettre un signal parmi les trois signaux d'entrée à l'aide du signal de train d'impulsion ternaire comme signal pour la sélection,
un additionneur (3b) configuré pour ajouter un coefficient de filtre lu depuis la partie destinée au stockage de coefficients de filtre,
un soustracteur (3c) configuré pour soustraire un coefficient de filtre lu depuis la partie destinée au stockage de coefficients de filtre, et
une partie (3g) destinée au stockage des résultats configurée pour stocker les résultats de la convolution entre le signal de train d'impulsion et les coefficients de filtre, dans lequel le multiplexeur est configuré pour sélectionner un signal et émettre le signal sélectionné parmi les signaux d'entrée, c'est-à-dire, parmi le signal de sortie issu de l'additionneur, le signal de sortie issu du soustracteur et le signal de sortie depuis la partie destinée au stockage des résultats, dans lequel
le multiplexeur est configuré pour sélectionner le signal de sortie issu de l'additionneur et émettre celui-ci lorsque le signal de train d'impulsion est positif, pour sélectionner le signal de sortie issu du soustracteur et émettre celui-ci lorsque le signal de train d'impulsion est négatif, et pour sélectionner le signal de sortie depuis la partie destinée au stockage des résultats lorsque le signal de train d'impulsion est nul et pour émettre celui-ci, et dans lequel
la partie destinée au stockage des résultats est configurée pour échantillonner le signal de sortie issu du multiplexeur à la deuxième période prédéterminée d'échantillonnage et émettre celui-ci en tant que signal de vitesse.

3. Dispositif pour la mesure d'une vitesse selon la revendication 2, dans lequel
le filtre passe-bas constitue un filtre FIR,
la partie de comptage est configurée pour émettre un signal de réinitialisation ayant la deuxième période prédéterminée d'échantillonnage comme un des signaux de rythme,
l'additionneur est configuré pour ajouter le coefficient de filtre lu depuis la partie destinée au stockage de coefficients de filtre au signal de sortie depuis la partie destinée au stockage des résultats,
le soustracteur est configuré pour soustraire le coefficient de filtre lu depuis la partie destinée au stockage de coefficients de filtre provenant du signal de sortie depuis la partie destinée au stockage des résultats, et dans lequel
la partie destinée au stockage des résultats est configurée pour réinitialiser le résultat de la convolution à la deuxième période prédéterminée d'échantillonnage.

4. Dispositif pour la mesure d'une vitesse selon la revendication 2 ou 3, dans lequel
le dispositif comprend au moins deux ensembles de combinaisons du filtre passe-bas et de la partie destinée à l'échantillonnage de sortie,
le filtre passe-bas dans chaque ensemble est configuré pour recevoir un signal commun de train d'impulsion ternaire depuis la partie pour la conversion d'impulsion,
la partie destinée à l'échantillonnage d'entrée dans chaque ensemble est configurée pour échantillonner le signal de train d'impulsion ternaire sur base du signal d'échantillonnage d'entrée qui est synchronisé avec et a une phase différente de celles des autres filtres passe-bas, et est configuré pour recevoir le signal échantillonné,
la partie destinée au stockage de coefficients de filtre dans chaque ensemble est configuré pour la lecture de coefficients de filtre sur base du signal d'extraction dans lequel le signal d'extraction est synchronisé avec et a la même phase que le signal d'échantillonnage d'entrée dans le même filtre passe-bas et dans lequel le signal de lecture est synchronisé avec et a une phase différente des signaux d'échantillonnage d'entrée dans les autres filtres passe-bas,
l'additionneur et le soustracteur dans chaque ensemble sont respectivement configurés pour ajouter et pour soustraire un coefficient de filtre lu depuis la partie destinée au stockage de coefficients de filtre dans chaque ensemble, et dans lequel
le dispositif est configuré pour traiter de manière arithmétique les signaux de sortie issus des parties respectives pour l'échantillonnage de sortie en séquence ou en combinaison, et est configuré pour émettre les résultats.

5. Procédé pour la mesure d'une vitesse comprenant :
une étape pour convertir quels signaux biphasés sont convertis en un signal de train d'impulsion ternaire ayant une valeur positive, négative ou nulle correspondant aux phases des signaux biphasés,
une étape destinée au filtrage passe-bas pour la suppression de composantes de bruit de quantification dans le signal de train d'impulsion ternaire, à l'aide d'un filtre numérique, dans lequel une composante basse fréquence du signal de train d'impulsion est obtenue aux moyens de traitement arithmétique entre le signal de train d'impulsion ternaire et des coefficients de filtre, dans lequel le signal de train d'impulsion ternaire est échantillonné à une première période prédéterminée d'échantillonnage, une convolution entre le signal de train d'impulsion et les coefficients de filtre est réalisée sur base du signal échantillonné de train d'impulsion ternaire et, dans la convolution, un coefficient de filtre est ajouté lorsque le signal échantillonné de train d'impulsion ternaire est positif, et un coefficient de filtre est soustrait lorsque le signal échantillonné de train d'impulsion ternaire est négatif, dans lequel la lecture des coefficients de filtre est synchronisée avec l'échantillonnage du signal de train d'impulsion ternaire,
une étape pour l'échantillonnage de sortie dans laquelle le résultat de la convolution est échantillonné à une deuxième période prédéterminée d'échantillonnage, et
une étape pour l'émission dans laquelle le résultat échantillonné de la convolution est émis en tant que signal de vitesse correspondant à la vitesse déterminée par le signal biphasé.

6. Procédé pour la mesure d'une vitesse selon la revendication 5, dans lequel
le procédé a une pluralité d'ensembles de combinaisons de l'étape de filtrage passe-bas et l'étape de l'échantillonnage de sortie dans lequel un signal commun de train d'impulsion est entré dans les ensembles respectifs des combinaisons,
pendant la même étape de filtrage passe-bas, l'échantillonnage du signal de train d'impulsion est synchronisé avec et a la même phase que la lecture des coefficients de filtre pour la convolution, et dans lequel
entre les étapes de filtrage passe-bas, l'échantillonnage du signal de train d'impulsion dans une des étapes est synchronisé avec et a une phase différente provenant de la lecture des coefficients de filtre pour la convolution dans une quelconque autre étape.
